(19) Europäisches Patentamt
European Patent Office
Office européen des brevets

(11) Veröffentlichungsnummer: **0 159 582**
**A1**

# (12) EUROPÄISCHE PATENTANMELDUNG

(21) Anmeldenummer: **85103943.8**

(22) Anmeldetag: **01.04.85**

(51) Int. Cl.[4]: **C 08 G 65/44**

(30) Priorität: **14.04.84 DE 3414236**

(43) Veröffentlichungstag der Anmeldung: **30.10.85**
**Patentblatt 85/44**

(84) Benannte Vertragsstaaten: **BE DE FR GB NL**

(71) Anmelder: **BASF Aktiengesellschaft,**
**Carl-Bosch-Strasse 38, D-6700 Ludwigshafen (DE)**

(72) Erfinder: **Muench, Volker, Dr., Luitpoldstrasse 114,**
**D-6700 Ludwigshafen (DE)**
Erfinder: **Hambrecht, Juergen, Dr., Werderstrasse 30,**
**D-6900 Heidelberg (DE)**
Erfinder: **Himmele, Walter, Dr., Eichenweg 14,**
**D-6909 Walldorf (DE)**
Erfinder: **Echte, Adolf, Dr., Leuschnerstrasse 42,**
**D-6700 Ludwigshafen (DE)**
Erfinder: **Swoboda, Johann, Dr., Neuwiesenstrasse 28,**
**D-6700 Ludwigshafen (DE)**

## (54) Verfahren zur Herstellung von Polyphenylenethern.

(57) Die Erfindung betrifft ein Verfahren zur Herstellung hochmolekularer Polyphenylenether aus einwertigen Phenolen, durch oxidative Kupplungsreaktion mit Sauerstoff in Anwesenheit eines Lösungsmittels und eines Katalysatorkomplexes aus einem Kupfersalz und einem organischen Amin der allgemeinen Formel

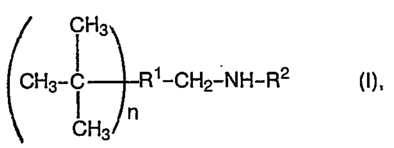

(I),

wobei $R^1$ = eine $C_2$- bis $C_{25}$-, bevorzugt $C_2$- bis $C_9$-Alkyliden- oder Alkenylidengruppe, $R^2$ = ein H-Atom oder eine $C_1$- bis $C_{12}$-, bevorzugt $C_1$- bis $C_4$-Alkyl- oder $C_5$- bis $C_8$-Cycloalkylgruppe, die gegebenenfalls mit funktionellen Gruppen substituiert sind, n = eine ganze Zahl zwischen 1 und 4 und die Verwendung der erhaltenen Polyphenylenether zur thermoplastischen Verarbeitung zu Formteilen.

Bevorzugt sind die funktionellen Gruppen $-OR^3$, $-NHR^3$ oder $-SR^3$, wobei $R^3$ = H-Atom oder eine $C_1$- bis $C_{12}$-Alkyl- oder $C_5$- bis $C_8$-Cycloalkylgruppe. Die am besten geeigneten Amine sind 3,5,5-Trimethylhexylamin, N-Methyl-N-(3,5,5-trimethylhexyl)-amin, 4,6,6-Trimethyl-2-(1,3,3-trimethylbutyl)-heptylamin oder 8,8-Dimethyl-4,5-bis(3,3-dimethylbutyl)nonylamin.

EP 0 159 582 A1

BASF Aktiengesellschaft 

BEZEICHNUNG GEÄNDERT
siehe Titelseite

Verfahren zur Herstellung von Polyphenylenethern und deren Verwendung zur Herstellung von Formteilen

Die Erfindung betrifft ein Verfahren zur Herstellung hochmolekularer Polyphenylenether aus einwertigen Phenolen, die in den beiden ortho-Stellungen oder zusätzlich in einer meta-Position, nicht aber in der para-Stellung Alkylsubstituenten aufweisen durch oxidative Kupplungsreaktion mit Sauerstoff bei Temperaturen zwischen 10 und 50°C in Anwesenheit eines Katalysatorkomplexes aus einem Kupfersalz und einem organischen Amin in Gegenwart eines aromatischen $C_6$- bis $C_{10}$-Kohlenwasserstoffs als Lösungsmittel im Bereich von 1:1 bis 20:1 Gewichtsteilen, bezogen auf das monomere Phenol und gegebenenfalls eines Aktivators und Aufarbeitung der erhaltenen Polymerisatlösung.

Bei derartigen Verfahren zur Selbstkondensation einwertiger Phenole durch Einwirken von Sauerstoff sind Katalysatorsysteme erforderlich, die in Gegenwart eines Lösungsmittels die oxidative Kupplungsreaktion in Gang bringen.

Polyphenylenether und Verfahren zu ihrer Herstellung sind an sich bekannt und in zahlreichen Veröffentlichungen z.B. in den US-Patenten 3 306 874, 3 306 875, 3 365 422, 3 639 656, 3 642 699, 3 722 299, 3 838 102, 3 661 848 und in den DE-Offenlegungsschriften 2 505 328, 2 738 889, 3 033 813, 3 214 425 und 3 314 711 beschrieben. Alle diese bisher beschriebenen Reaktionswege weisen jedoch den Nachteil auf, daß bei der oxidativen Polykondensation bei der Herstellung höhermolekularer Polykondensate zu lange Reaktionszeiten erforderlich sind und die Ausbeute an Polyphenylenether zugunsten der Diphenochinonbildung, die eine bekannte Konkurrenzreaktion darstellt, verschoben ist und deshalb zumeist unter 99 Gew.-%, bezogen auf das eingesetzte Phenol, liegt.

In den Literaturstellen US-A-3 306 874, DE-A-2 505 328, DE-A-2 738 889 und DE-A-3 314 711 ist der Einsatz von tertiären Butylgruppen tragenden Aminen in Kupfersalz-Katalysatorkomplexen bereits beschrieben. Diese enthalten aber die tertiäre Butylgruppe direkt am Stickstoff gebunden. Amine dieser Art, wie beispielsweise N,N'-Di-tert.-butylethylendiamin, bewirken im Amin-Kupferkatalysatorkomplex kurze Polymerisationszeiten bei relativ hohen Nebenproduktanteilen. Nebenproduktanteile sind aber insbesondere bei Aufarbeitungsverfahren nach dem Totalisolationsverfahren, wie z.B. bei der Mehrstufenverdampfung (vgl. EP-A1-71093) von wesentlichen Nachteil.

Der Erfindung lag deshalb die Aufgabe zugrunde, ein Amin-Kupferkatalysatorsystem zu finden, das bei kurzen Reaktionszeiten Polymere mit vergleichsweise hohen Intrinsic-Viskositäten bei gleichzeitig hoher Ausbeute und geringem Diphenochinongehalt liefert.

Diese Aufgabe wird erfindungsgemäß dadurch gelöst, daß als Aminkomponente im Katalysatorkomplex Amine der allgemeinen Formel (I)

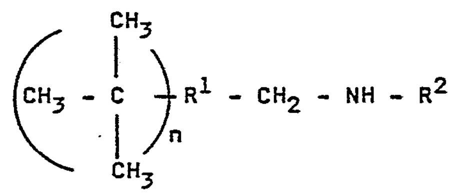 (I)

eingesetzt werden, wobei $R^1$ = eine $C_2$- bis $C_{25}$-Alkyliden- oder -Alkenylidengruppe, $R^2$ = ein H-Atom oder eine $C_1$- bis $C_{12}$-Alkyl- oder $C_5$- bis $C_8$-Cycloalkylgruppe, die gegebenenfalls mit funktionellen Gruppen substituiert sind, und n = eine ganze Zahl zwischen 1 und 4. Bevorzugt ist die funktionelle Gruppe im Rest $R^2$ $-OR^3$, $-NHR^3$ oder $SR^3$, wobei $R^3$ = H-Atom oder eine $C_1$- bis $C_{12}$-Alkyl- oder $C_5$- bis $C_8$-Cycloalkylgruppe. Bevorzugt sind auch Amine der Formel (I), in denen $R^1$ = eine $C_2$- bis $C_9$-Alkylidengruppe, $R^2$ = ein H-Atom oder eine $C_1$- bis $C_4$-Alkylgruppe und n = 1 oder 2. Besonders bevorzugt sind die Verbindungen gemäß Unteranspruch 4.

Unter hochmolekularen Polyphenylenethern werden die durch oxidative Kupplung von Alkylphenolen zu einer Kette alkylsubstituierter, in para-Stellung durch Sauerstoffatome etherartig gebundene Benzolringe verstanden. Die Polymeren weisen im allgemeinen Molekulargewichte von 15000 bis 90000, bevorzugt 20000 bis 80000, bestimmt nach der in "Macromolecular Synthesis" 1, (1978), Seite 83 beschriebene Methode, auf. Hochmolekulare Polyphenylenether, auch Poly(phenylenoxide) genannt oder als Poly(phenylenether) bezeichnet, sind an sich aus der Literatur seit längerem bekannt (vgl. z.B. die US-Patente 3 661 848, 3 129 625 oder 3 378 505), so daß sich hier eine weitere Beschreibung erübrigt.

Die zur Herstellung der hochmolekularen Polyphenylenether verwendeten einwertigen Phenole, die in den beiden ortho-Stellungen oder zusätzlich in einer meta-Position, nicht aber in der para-Stellung Alkylsubstituenten aufweisen, sind übliche Phenole wie 2,6-Dimethylphenol, 2,6-Diethylphenol, 2-Methyl-6-ethylphenol, 2-Methyl-6-propylphenol, 2,6-Dibutylphenol, 2,3,6-Trimethylphenol sowie Gemische dieser Phenole. Bevorzugt wird das 2,6-Dimethylphenol, das nach den in Houben-Weyl-Müller, Methoden

der organischen Chemie, Phenole, Teile 2, Bd. 6/1C, Georg Thieme Verlag, Stuttgart, 1976, Seite 1187 ff beschriebenen Methoden von den bei der Polymerisation störenden Phenolen, wie Phenol, o-Kresol, m-Kresol und den höherkernigen Phenolen, wie 2,6-Dimethyl-1-hydroxydiphenyl, abgetrennt wird.

Zur Ausführung der Polykondensation wird üblicherweise Sauerstoff in die 10 bis 50, vorzugsweise 15 bis 40°C warme Lösung des Monomeren in Gegenwart eines Katalysatorkomplexes eingeleitet. Es kann aber auch Luft verwendet werden. Die Sauerstoffdurchflußgeschwindigkeit ist im wesentlichen die gleiche, wie sie in den US-Patenten 3 306 874 und 3 306 875 beschrieben ist.

Bei dem für die bekannten Polykondensationen verwendeten Katalysatorsysteme handelt es sich üblicherweise um eine Kombination aus einem Amin, z.B. n-Dibutylamin, Diethylamin, Picolin, Pyridinbase etc. mit einem Kupfersalz, wie Kupfer-(I)-bromid, Kupfer-(I)-chlorid, Kupfer-(I)-iodid, Kupfer(II)-bromid, Kupfer-(II)-chlorid, Kupfer-(II)-acetat und andere. Dabei werden die Amine üblicherweise in Mengen von 200 bis 10000 Mol.-%, bezogen auf das eingesetzte Kupfersalz, vorzugsweise in Mengen von 800 bis 2000 Mol.-%, und in Mengen von 0,5 bis 50 Mol.-%, bezogen auf das eingesetzte Phenol, vorzugsweise in Mengen von 2 bis 20 Mol.-%, eingesetzt. Die Konzentration der Amine kann innerhalb weiter Grenzen variieren, zweckmäßig sind jedoch niedere Konzentrationen. Die Konzentration der Kupfersalze wird gering gehalten und variiert vorzugsweise von 0,2 bis 2,5 Mol pro 100 Mol des Monomeren.

Der Anteil des Lösungsmittels liegt üblicherweise im Bereich von 1:1 bis 20:1 Gewichtsteilen, d.h. maximal bis zu einem Überschuß des 20-fachen am Lösungsmittel, bezogen auf das Gewicht des Monomeren. Nach anmeldungsgemäßem Verfahren soll als Lösungsmittel ein aromatischer $C_6$- bis $C_{10}$-Kohlenwasserstoff verwendet werden. Geeignete Kohlenwasserstoffe sind insbesondere Toluol, Ethylbenzol, Xylol, Diethylbenzol oder deren Gemische, wobei vorzugsweise Toluol oder Ethylbenzol verwendet wird. Die Lösungsmittel werden bevorzugt im Bereich von 1:1 bis 10:1 Gewichtsteilen, bezogen auf das Gewicht des Phenols, eingesetzt. Zur Erhöhung der Katalysatorlöslichkeit können zudem geringe Mengen eines Alkanols, wie Methanol, Ethanol oder iso-Propanol zugegen sein. Darüber hinaus kann die Reaktionsmischung einen Aktivator wie ein Diarylguanidin oder ein Diarylformamidin enthalten (vgl. US-A 3 544 515).

Beispiele für die erfindungsgemäß einzusetzenden Amine der allgemeinen Formel (I) im Kupfer-Katalysatorkomplex sind Amine mit $R^1$ = einer ver-

zweigten oder unverzweigten Alkyliden- oder Alkenylidengruppe mit 2 bis 25, bevorzugt 2 bis 9 C-Atomen und $R^2$ = einem Wasserstoffatom oder einer $C_1$- bis $C_{12}$-, bevorzugt $C_1$- bis $C_4$-Alkyl- oder $C_5$- bis $C_8$-Cycloalkylgruppe, wobei der Rest $R^2$ funktionelle Gruppen wie $-OR^3$, $-NHR^3$ oder $-SR^3$ tragen kann, in denen $R^3$ ein Wasserstoffatom oder eine niedere Alkyl- oder Cycloalkylgruppe mit 1 bis 12 bzw. 5 bis 8 C-Atomen ist. Die tert.-Butylgruppe kann in den Aminen 1- bis 4mal bevorzugt, oder 2mal enthalten sein. Bevorzugt eingesetzt werden 5,5-Dimethylhexylamin, 6,6-Dimethylheptylamin, 7,7-Dimethyloctylamin, 8,8-Dimethylheptylamin usw. bis hin zum 15,15-Dimethylhexyadecylamin oder verzweigte Amine wie 2,4,4-Trimethylpentylamin, 3,4,4-Trimethylpentylamin, 3,5,5-Trimethylhexylamin, 4,6,6-Trimethyl-2-(1,3,3-trimethylbutyl)-heptyl amin, 4,5,7,7-Tetramethyl-2-(1,3,3-trimethylbutyl)-heptylamin, 8,8-Dimethyl-4,5-bis(3,3-dimethylbutyl)-nonylamin u.a. Beispiele für sekundäre Amine der allgemeinen Struktur (I) sind: N-Methyl-N-[-3,5,5-trimethylhexyl]amin, N-Butyl-N-[--3,7,7-trimethyloctyl]-amin, N-Methyl-N-[-4,6,6-trimethyl-2-(1,3,3-trimethylbutyl)-heptyl]amin, N-3-Thiabutyl-N-[7,7-dimethyloctyl]amin, N-[4-Methyl-5-oxyhexyl]-N-[-3,9,9-trimethyl-6-(2,2-dimethylpropyl)de--cyl]amin oder N-5-Hydroxiheptyl-N-[-3,9,13,13-tetramethyl-4-(5,5-dimethylhexyl)tetradecyl]amin, N-3-Methylcyclohexyl-N-[4,7,7-trimethyloctyl]amin u.a. Ganz besonders bevorzugt eingesetzt werden 3,5,5-Trimethylhexylamin, 4,6,6-Trimethyl-2-(1,3,3-trimethylbutyl)-heptylamin, 8,8-Dimethyl-4,5-bis(3,3-dimethylbutyl)nonylamin und N-Methyl-N--(3,5,5-trimethyl-hexyl)amin.

Zur Aufarbeitung der erhaltenen Polymerisatlösung wird nach Beendigung der Polykondensation nach üblichen Verfahren, die aus den eingangs zitierten Literaturstellen bekannt sind, die Polykondensation z.B. durch Zugabe von wäßriger Ethylendiamintetraessigsäuredinatriumsalz-Lösung abgestoppt und gleichzeitig wird die Metallkomponente durch Komplexbildung und Abtrennen in die wäßrige Phase entfernt. Aus der erhaltenen Polyphenylenetherlösung kann das Polymere nach üblichen Verfahren, z.B. durch Ausfällen mit Methanol, abgetrennt werden. Bevorzugt ist aber ein Mehrstufenverdampfungsverfahren, bei dem das Lösungsmittel durch Verdampfen entfernt wird (vgl. EP-A1-71093, DE-A-3 315 803, DE-A 3 315 802).

Die mit der Erfindung erzielten Vorteile bestehen insbesondere darin, daß man ein Polymerisat mit hoher Intrinsic-Viskosität in kurzer Zeit erhält. Bei dieser Polymerisationstechnik wird außerdem das Polymere in Ausbeuten von größer als 99 Gew.-%, bezogen auf das eingesetzte Monomer, erhalten. Das bedeutet, der Anteil an Diphenochinon ist niedrig und liegt zumindest unter 1 Gew.-%. Durch den Einsatz der erfindungsgemäßen Amine im Kupfer-Katalysatorkomplex werden Polyphenylenether hergestellt, welche

eine deutlich geringere Färbung, als die nach anderen Methoden synthetisierten besitzen. Des weiteren ist von Vorteil, daß es infolge des angewendeten Polymerisationsverfahrens (Gaseinleitung, starkes Rühren) zu keinem starken Aufschäumen der Reaktionslösung und damit nicht zu Verfahrensschwierigkeiten kommt, obwohl die eingesetzten langkettigen linearen Alkyle, die eine polare Gruppe an einem Ende tragen, eigentlich als Tenside wirken sollten. Des weiteren wird bei dem erfindungsgemäßen Verfahren das Abscheiden von Kupfer enthaltenden Niederschlägen verhindert.

Die erhaltenen Polyphenylenether können alleine oder im Gemisch mit anderen Polymeren, insbesondere in Mischung mit Styrolpolymerisaten, nach üblichen Methoden zu üblichen Formteilen verarbeitet werden.

In den folgenden Beispielen ein die Tetramethyldiphenochinon-Anteile (DPQ-Anteile) direkt nach der Polymerisation vor der Zugabe des Stabilisators an mit Chloroform verdünnten Lösungen mittels Hochdruckflüssigkeitschromatographie (HPLC) bestimmt.

<u>Beispiele</u>

In einen Glaskolben von einem Liter Inhalt mit Rückflußkühler, Blattrührer und Sauerstoffeinleitungsrohr, das bis auf den Boden des Glaskolbens geführt ist, werden 450 g Toluol vorgelegt. Dazu gibt man eine Katalysatormischung aus 0,72 g Cu(I)Br (0,005 Mol), 0,01 Mol des jeweiligen Amins und 10 ml Toluol, die in einem Erlenmeyerkolben bei 50°C unter starkem Rühren innerhalb von 5 Minuten homogenisiert worden ist. Die toluolische Katalysatorlösung wird bei 350 Upm Rührergeschwindigkeit mit 50 l/h Sauerstoff begast und 116 g einer 50 gewichtsprozentigen 2,6-Dimethylphenol-Lösung in Toluol (Reinheit des Dimethylphenols: 99,9 Gew.-%) innerhalb einer halben Stunde kontinuierlich zudosiert. Anschließend wird 0,5 Stunden mit 50 l/h Sauerstoff weiterbegast. Die Reaktionstemperatur wird über die gesamte Zeit bei 26 bis 28°C gehalten. Danach wird die Reaktion durch Zugabe von 20 g einer 10 gewichtsprozentigen wäßrigen Ethylendiamintetraessigsäuredinatriumsalz-Lösung gemäß US-A-3 306 874 bei Raumtemperatur abgestoppt. Der DPQ-Gehalt der Reaktionslösung wird durch HPLC bestimmt und ist in der Tabelle 1 mit aufgeführt. Nach dem Abtrennen der wäßrigen Phase wird der Polyphenylenether durch Zugabe der dreifachen Menge Methanol ausgefällt, gewaschen und bei 60°C im Vakuum getrocknet. Die Intrinsic-Viskosität wird bei 25°C in 0,5 gewichtsprozentigen Lösungen in Chloroform bestimmt, sie ist ebenfalls in der Tabelle 1 aufgeführt.

Vergleichsbeispiele

Es wurde wie bei den erfindungsgemäßen Beispielen gearbeitet, jedoch wurden statt der erfindungsgemäß einzusetzenden Amine solche Amine, wie sie dem Stand der Technik aus den Literaturstellen US-A- 3 306 874, DE-A- 2 505 328, DE-A-2 738 889 und DE-A-3 314 711 entsprechen, verwendet. Die Aufarbeitung erfolgte ebenfalls analog den erfindungsgemäßen Beispielen.

<u>Tabelle 1</u> Beispiele und Vergleichsbeispiele

| Beispiel Nr. | Amin | Polyphenylenether Ausbeute *) (Gew.-%) | Polyphenylenether Intrinsic-Viskosität (dl/g) | DPQ-Ausbeute **) (Gew.-%) | Bemerkungen zur Polymerisation |
|---|---|---|---|---|---|
| 1 | 3,5,5-Trimethyl-hexylamin | 99,1 | 0,74 | 0,6 | keine |
| 2 | 4,6,6-Trimethyl-2-(1,3,3-trimethyl-butyl)heptylamin | 99,2 | 0,70 | 0,5 | keine |
| 3 | 8,8-Dimethyl-4,5-bis-(3,3-dimethylbu-tyl)-nonylamin | 99,3 | 0,81 | 0,5 | keine |
| 4 | N-Methyl-N-(3,5,5-trimethylhexyl)-amin | 99,0 | 0,98 | 0,9 | keine |
| Vergleichsbeispiele (nicht erfindungsgemäß) | | | | | |
| A | Di-n-butylamin | 96,3 | 0,48 | 2,1 | Kupfersalzabscheidungen |
| B | N,N'-Di-tert.-butyl-ethylendiamin | 98,4 | 0,85 | 1,4 | keine |
| C | N,N'-Di-tert.-butyl-ethylendiamin (15 Gew.%)<br>Di-n-butylamin (30 Gew.%)<br>Dimethylbutylamin (55 Gew.%) | 98,1 | 0,56 | 1,9 | Kupfersalzabscheidung |
| D | n-Dodecylamin | 97,8 | 0,61 | 1,9 | starkes Schäumen, Kupfersalzabscheidungen |

*)) bezogen auf eingesetztes 2,6-Dimethylphenol, gemessen nach Fällung

**)) bezogen auf eingesetztes 2,6-Dimethylphenol, gemessen mittels HPLC aus der Lösung

Patentansprüche

1. Verfahren zur Herstellung hochmolekularer Polyphenylenether aus einwertigen Phenolen, die in den beiden ortho-Stellungen oder zusätzlich in einer meta-Position, nicht aber in der para-Stellung Alkylsubstituenten aufweisen, durch oxidative Kupplungsreaktion mit Sauerstoff bei Temperaturen zwischen 10 und 50°C in Anwesenheit eines Katalysatorkomplexes aus einem Kupfersalz und einem organische Amin in Gegenwart eines aromatischen $C_6$- bis $C_{10}$-Kohlenwasserstoffs als Lösungsmittel im Bereich von 1:1 bis 20:1 Gewichtsteilen, bezogen auf das monomere Phenol, und gegebenenfalls eines Aktivators und Aufarbeitung der erhaltenen Polymerisatlösung, dadurch gekennzeichnet, daß als Aminkomponente im Katalysatorkomplex Amine der allgemeinen Formel (I):

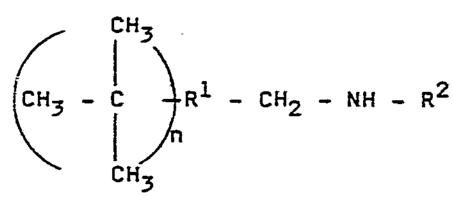 (I)

eingesetzt werden, wobei $R^1$ = eine $C_2$- bis $C_{25}$-Alkyliden- oder Alkenylidengruppe, $R^2$ = ein H-Atom oder eine $C_1$- bis $C_{12}$-Alkyl- oder $C_5$- bis $C_8$-Cycloalkylgruppe, die gegebenenfalls durch funktionellen Gruppen substituiert sind, und n = eine ganze Zahl zwischen 1 und 4.

2. Verfahren nach Anspruch 1, dadurch gekennzeichnet, daß im Rest $R^2$ des Amins (I) die funktionellen Gruppen $-OR^3$, $-NHR^3$ oder $-SR^3$ sind, wobei $R^3$ = H-Atom oder eine $C_1$- bis $C_{12}$-Alkyl- oder $C_5$- bis $C_8$-Cycloalkylgruppe.

3. Verfahren nach Anspruch 1, dadurch gekennzeichnet, daß im Amin (I) $R^1$ = eine $C_2$- bis $C_9$-Alkylidengruppe, $R^2$ = ein H-Atom oder eine $C_1$- bis $C_4$-Alkylgruppe und n = 1 oder 2.

4. Verfahren nach Anspruch 1, dadurch gekennzeichnet, daß das Amin (I) 3,5,5-Trimethylhexylamin, N-Methyl-N-(3,5,5-trimethylhexyl)-amin, 4,6,6-Trimethyl-2-(1,3,3-trimethylbutyl)-heptylamin oder 8,8-Dimethyl-4,5-bis(3,3-dimethylbutyl)nonylamin ist.

5. Verwendung der nach Anspruch 1 hergestellten Polyphenylenether zur thermoplastischen Verarbeitung zu Formteilen.

0159582

Europäisches Patentamt

# EUROPÄISCHER RECHERCHENBERICHT

Nummer der Anmeldung

EP 85 10 3943

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X,Y | EP-A-0 045 395 (BASF)<br>* Ansprüche *<br>--- | 1-5 | C 08 G 65/44 |
| Y | FR-A-2 260 594 (GEN.ELECTRIC)<br>* Ansprüche; Seiten 11,12 *<br>----- | 1-5 | |
| | | | RECHERCHIERTE SACHGEBIETE (Int. Cl.4) |
| | | | C 08 G |

Der vorliegende Recherchenbericht wurde für alle Patentansprüche erstellt.

| Recherchenort | Abschlußdatum der Recherche | Prüfer |
|---|---|---|
| DEN HAAG | 03-07-1985 | DERAEDT G. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82